# EUROPEAN PATENT APPLICATION

(11) **EP 4 424 460 A1**
(43) Date of publication of application: **04.09.2024**
(21) Application number: 22946158.7
(22) Date of filing: 14.06.2022
(51) Int. Cl.: B23P 19/06, B25J 11/00

(54) **ASSEMBLY MECHANISM, MANIPULATOR AND FASTENER ASSEMBLY LINE**

(71) Applicant: Contemporary Amperex Technology Co., Limited, Ningde, Fujian 352100 (CN)
(72) Inventor: XIA, Yijun, Ningde, Fujian 352100 (CN)
(74) Representative: Ziebig Hengelhaupt Intellectual Property Attorneys Patentanwaltskanzlei PartGmbB
(86) International application number: PCT/CN2022/098725
(87) International publication number: WO 2023/240459

(57) **Abstract**

The present application provides an assembly mechanism, a manipulator, and a fastener assembly line, belonging to the field of automatic manufacturing devices. The assembly mechanism includes an actuator, a first drive unit, and a first detector. The first drive unit is connected to the actuator, and the first drive unit is used for driving the actuator to move in a first direction, so that the actuator assembles a fastener. The first detector is used for obtaining a magnitude of a pressure acting on the fastener by the actuator and generating a pressure signal, and the first drive unit responds to the pressure signal to control the magnitude of the pressure acting on the fastener by the actuator within a preset range. The assembly mechanism of this structure can control force acting on the fastener by the actuator, thereby alleviating a phenomenon of inadequate assembly of the fastener due to too small force acting on the fastener by the actuator to ensure assembly accuracy of the fastener, and reducing a risk of damage to the fastener or a workpiece to be assembled due to too large force acting on the fastener by the actuator.

## Description

### Technical Field

The present application relates to the field of automatic manufacturing devices, and in particular, to an assembly mechanism, a manipulator, and a fastener assembly line.

### Background Art

In the field of mechanical manufacturing, a fastener is usually used for connecting two objects to achieve a connection relationship between the two objects. For example, two objects are connected by a fastener in a process of welding, screwing, bonding, riveting, or the like. The riveting has good impact resistance and seismic performance, and has characteristics such as reliable connection, small component deformation, good fatigue resistance, and insensitivity to stress concentration. Therefore, the riveting process has been widely developed and popularized. In order to improve the riveting efficiency of a workpiece to be connected, a riveting device is usually used in the prior art to automatically rivet the workpiece to be connected. However, the existing riveting device has problems of poor riveting accuracy and quality, which causes inadequate assembly of a rivet or damage to the workpiece to be connected. As a result, the rivet may fall off during use, and the assembly reliability and stability of the fastener such as a rivet are low.

### Summary

Embodiments of the present application provide an assembly mechanism, a manipulator, and a fastener assembly line, which can effectively improve the assembly reliability and assembly stability of a fastener.

In a first aspect, an embodiment of the present application provides an assembly mechanism used for assembling a fastener, the assembly mechanism including an actuator, a first drive unit, and a first detector; the first drive unit is connected to the actuator, and the first drive unit is used for driving the actuator to move in a first direction, so that the actuator assembles the fastener in the first direction; and the first detector is used for obtaining a magnitude of a pressure acting on the fastener by the actuator and generating a pressure signal, and the first drive unit responds to the pressure signal to control the magnitude of the pressure acting on the fastener by the actuator within a preset range.

In the foregoing technical solution, the assembly mechanism is equipped with the actuator, the first drive unit, and the first detector, where the first detector can obtain the magnitude of the pressure acting on the fastener by the actuator and generate the pressure signal when the first drive unit drives the actuator to assemble the fastener in the first direction, so that the first drive unit can control the magnitude of the pressure acting on the fastener by the actuator within the preset range according to the pressure signal, and the assembly mechanism of this structure can control force acting on the fastener by the actuator when assembling the fastener to monitor the assembly state of the fastener in real time, thereby alleviating a phenomenon of inadequate assembly of the fastener due to too small force acting on the fastener by the actuator to ensure assembly accuracy of the fastener, reducing a risk of damage to the fastener or a workpiece to be assembled due to too large force acting on the fastener by the actuator to effectively improve assembly stability and reliability of the fastener and reduce a risk of detachment of the fastener during use.

In some embodiments, the first drive unit includes a movable seat and a first drive member; the actuator is disposed on the movable seat, and in the first direction, the first detector is used for detecting the magnitude of the pressure between the actuator and the movable seat and generating the pressure signal; and the first drive member is connected to the movable seat and used for driving the movable seat to move in the first direction.

In the foregoing technical solution, the actuator is disposed on the movable seat, so that the first drive member can drive the actuator to move in the first direction when driving the movable seat to move in the first direction, to achieve assembly of the fastener by the actuator. This structure is simple and convenient for the assembly by the actuator. Moreover, the first detector detects the magnitude of the pressure between the actuator and the movable seat to obtain the magnitude of the pressure acting on the fastener by the actuator. That is, the reactive force acting on the fastener by the actuator enables the same pressure to be generated between the actuator and the movable seat, so that the first detector detects the magnitude of the pressure between the actuator and the movable seat to obtain the magnitude of the pressure acting on the fastener by the actuator. The assembly mechanism of this structure facilitates assembly of the first detector and enables the first detector to obtain the magnitude of the pressure acting on the fastener by the actuator.

In some embodiments, the actuator is movably disposed on the movable seat in the first direction; and the movable seat has an abutment portion, the abutment portion is provided opposite to the actuator in the first direction, and the first detector is disposed between the abutment portion and the actuator.

In the foregoing technical solution, the actuator is movably disposed on the movable seat in the first direction, and the movable seat is provided with the abutment portion opposite to the actuator in the first direction, that is, the actuator can move relative to the abutment portion in the first direction, so that the actuator can approach the abutment portion due to reactive force of the fastener when assembling the fastener in the first direction, and then the first detector disposed between the abutment portion and the actuator can detect the magnitude of the pressure between the actuator and the movable seat to obtain the magnitude of the pressure acting on the fastener by the actuator. This structure is conducive to reducing manufacturing difficulties of the assembly mechanism and improving detection accuracy of the first detector.

In some embodiments, in the first direction, the actuator has a detection end and an execution end that are provided opposite to each other, the detection end is provided opposite to the abutment portion, and the execution end is used for assembling the fastener, where the first detector is mounted at the detection end.

In the foregoing technical solution, the actuator has the execution end for assembling the fastener and the detection end provided opposite to the abutment portion in the first direction, the first detector is mounted on the detection end of the actuator, and the actuator is enabled to drive the first detector to approach the abutment portion when assembling the fastener in the first direction, so as to detect the magnitude of the pressure between the detection end and the abutment portion to obtain the magnitude of the pressure acting on the fastener by the actuator.

In some embodiments, the first drive unit further includes a mounting seat and a second detector; the movable seat is movably disposed on the mounting seat in the first direction, and the first drive member is used for driving the movable seat to move relative to the mounting seat in the first direction; and the second detector is disposed on the mounting seat, the second detector is used for detecting a position of the movable seat on the mounting seat and generating a first position signal, and the first drive member responds to the first position signal.

In the foregoing technical solution, the first drive unit is further provided with the mounting seat, and the movable seat is movably disposed on the mounting seat in the first direction, so that the first drive member can drive the movable seat to move on the mounting seat in the first direction. This assembly mechanism has high structural stability and is easy to manufacture. Moreover, the second detector used for detecting the position of the movable seat in the first direction is further disposed on the mounting seat, so that the second drive member can accurately control a movement range of the movable seat according to the first position signal detected by the second detector, thereby improving operational accuracy of the assembly mechanism and reducing over-travel of the movable seat during movement in the first direction to reduce the risk of damage to the fastener by the assembly mechanism.

In some embodiments, the actuator includes an adsorption head, and the adsorption head is configured to adsorb the fastener.

In the foregoing technical solution, the actuator is provided with the adsorption head used for adsorbing the fastener, so that the actuator can pick up and assemble the fastener through adsorption. The actuator of this structure can expand the scope of application of the actuator, pick up and assemble fasteners of different models or sizes, reduce difficulties in picking up fasteners by the actuator, and also reduce damage to surfaces of the fasteners by the actuator, so as to improve assembly quality of the fasteners.

In some embodiments, the actuator further includes a vacuum suction tube; the vacuum suction tube is connected to the first drive unit, and the first drive unit is used for driving the vacuum suction tube to move in the first direction, where the adsorption head is connected to one end of the vacuum suction tube in the first direction.

In the foregoing technical solution, the adsorption head is disposed at one end of the vacuum suction tube, so that the vacuum suction tube can provide power for the adsorption head to adsorb the fastener, which is conducive to improving the reliability and stability of adsorption of the fastener by the adsorption head, and can effectively alleviate the phenomenon of detachment of the fastener when the assembly mechanism picks up or assembles the fastener.

In some embodiments, the actuator further includes an insulating sleeve, where the insulating sleeve is connected to an end, near the adsorption head in the first direction, of the vacuum suction tube, and the insulating sleeve is sleeved over an outer side of the adsorption head to isolate the vacuum suction tube from the fastener.

In the foregoing technical solution, the insulating sleeve is disposed at the end, near the adsorption head, of the vacuum suction tube, and the insulating sleeve is sleeved over the outer side of the adsorption head, so that the insulating sleeve can separate the fastener and the vacuum suction tube when the adsorption head adsorbs the fastener, to achieve insulation between the fastener and the vacuum suction tube, thereby reducing the risk of a short circuit between the fastener and the vacuum suction tube to reduce safety hazards when the assembly mechanism assembles the fastener.

In a second aspect, an embodiment of the present application further provides a manipulator, including a connecting mechanism and a plurality of assembly mechanisms described above; the connecting mechanism is configured to be connected to a robot; and the plurality of assembly mechanisms are arranged spacedly on the connecting mechanism in a second direction, the second direction being perpendicular to the first direction.

In the foregoing technical solution, the plurality of assembly mechanisms are disposed on the connecting mechanism, and the plurality of assembly mechanisms are arranged spacedly on the connecting mechanism in the second direction perpendicular to the first direction, so that the manipulator can pick up or assemble a plurality of fasteners simultaneously, which is beneficial to improving the assembly efficiency of the fasteners.

In some embodiments, the manipulator includes two assembly mechanisms, and the connecting mechanism is configured to adjust the distance between the two assembly mechanisms in the second direction.

In the foregoing technical solution, the manipulator is equipped with two assembly mechanisms, and the connecting mechanism can adjust the distance between the two assembly mechanisms in the second direction, so that the manipulator can adapt to operational requirements of workpieces to be assembled with different widths, and the range of use of the manipulator can be enlarged to be compatible with the workpieces to be assembled with different widths.

In some embodiments, the connecting mechanism includes a base and a second drive unit; the base is connected to the robot, and the assembly mechanism is movably disposed on the base in the second direction; and the second drive unit is disposed on the base and connected to the two assembly mechanisms, where the second drive unit is configured to drive the two assembly mechanisms to approach or move away from each other in the second direction, so as to adjust the distance between the two assembly mechanisms.

In the foregoing technical solution, the connecting mechanism is equipped with the base configured to be connected to the robot and the second drive unit disposed on the base, and the assembly mechanisms are movably disposed on the base in the second direction, so that the second drive unit can drive the assembly mechanisms to move relative to the base in the second direction, and the two assembly mechanisms approach or move away from each other in the second direction, so as to adjust the distance between the two assembly mechanisms. This structure is simple and easy to implement and adjust.

In some embodiments, the second drive unit includes a screw rod, a second drive member, and two screw rod sleeves; the screw rod is rotatably disposed on the base and extends in the second direction, the screw rod has two threaded segments with opposite threads, and the two threaded segments are arranged spacedly in the second direction; the second drive member is connected to the screw rod, and the second drive member is used for driving the screw rod to rotate relative to the base; and the two screw rod sleeves are sleeved over outer sides of the two threaded segments respectively and connected to the two assembly mechanisms respectively.

In the foregoing technical solution, the second drive unit is equipped with the screw rod, the second drive member, and the two screw rod sleeves, where the screw rod has two threaded segments with opposite threads and arranged in the second direction, and the two screw rod sleeves are sleeved over the outer sides of the two threaded segments of the screw rod respectively and connected to the two assembly mechanisms respectively, so that the second drive member can drive the two screw rod sleeves to approach or move away from each other in the second direction when driving the screw rod to rotate relative to the base, to simultaneously drive the two assembly mechanisms to approach or move away from each other in the second direction, thereby adjusting the distance between the two assembly mechanisms in the second direction.

In some embodiments, the connecting mechanism further includes a third detector, where the third detector is disposed on the base, the third detector is used for detecting a position of the assembly mechanism on the base and generating a second position signal, and the second drive unit responds to the second position signal.

In the foregoing technical solution, the third detector is disposed on the base, and the third detector can detect the position of the assembly mechanism on the base, so that the second drive unit can accurately control the position of the assembly mechanism in the second direction according to the second position signal detected by the third detector, which is beneficial to improving the operational accuracy of the manipulator to ensure the assembly accuracy of fasteners.

In a third aspect, an embodiment of the present application further provides a fastener assembly line, including a feeding mechanism, a robot, and the forgoing manipulator; the feeding mechanism is used for providing at least one fastener; and the connecting mechanism is connected to the robot, and the robot is configured to drive the manipulator to move.

In the foregoing technical solution, the robot can drive the manipulator to move, and the manipulator can pick up the fasteners provided by the feeding mechanism and assemble the fasteners, so as to achieve full automatic assembly of the fasteners, reduce manual involvement, and improve the assembly efficiency of the fasteners accordingly.

In some embodiments, the feeding mechanism includes a feeder and a plurality of distribution tracks; the feeder has a feed port for providing the at least one fastener; and the distribution tracks correspond to the assembly mechanisms one to one, the distribution tracks each have a feeding channel for conveying the at least one fastener, one ends of the feeding channels of the plurality of distribution tracks are all connected to the feed port, and the feeding channels are each used for conveying the at least one fasteners from an end, near the feed port, of the feeding channel to an end, away from the feed port, of the feeding channel, for the assembly mechanism to pick up the at least one fastener.

In the foregoing technical solution, the feeding mechanism is equipped with the feeder and the plurality of distribution tracks, and the feeding channels of the plurality of distribution tracks are all connected to the feed port of the feeder, so that the plurality of distribution tracks can distribute the fasteners provided by the feeder, the plurality of assembly mechanisms on the manipulator can simultaneously pick up the fasteners, and mutual interference can be reduced.

In some embodiments, the feeding mechanism further includes a plurality of positioning assemblies, where the positioning assemblies correspond to the distribution tracks one to one, the positioning assemblies are each disposed at the end, away from the feed port, of the corresponding feeding channel, and the positioning assemblies are used for positioning the fasteners.

In the foregoing technical solution, the positioning assemblies are each disposed at the end of the corresponding feeding channel away from the feed port of the feeder, the positioning assemblies can position the fasteners conveyed by the feeding channels, and the assembly mechanisms on the manipulator can pick up the fasteners, whereby the accuracy of picking up the fasteners by the assembly mechanisms is improved.

In some embodiments, the positioning assembly includes a fixed seat, a positioning seat, and a third drive member; the fixed seat is disposed at the end, away from the feed port, of the corresponding feeding channel; the positioning seat is provided with a positioning notch for positioning the fastener, the positioning seat is movably disposed on the fixed seat, and the positioning seat has a receiving position and a loading position; the third drive member is connected to the positioning seat, and the third drive member is used for driving the positioning seat to switch between the receiving position and the loading position; when the positioning seat is located at the receiving position, the positioning notch is aligned with the feeding channel of the corresponding distribution track to receive the fastener conveyed by the feeding channel; and when the positioning seat is located at the loading position, the positioning notch is staggered with the feeding channel of the corresponding distribution track, for the assembly mechanism to pick up the fastener.

In the foregoing technical solution, the positioning notch for positioning a fastener is disposed on the positioning seat, and the third drive member can drive the positioning seat to move between the loading position and the receiving position relative to the fixed seat, so that the positioning notch can be aligned with the feeding channel when the positioning seat is located at the receiving position to receive and position the fastener. In addition, when the positioning seat is located at the loading position, the positioning notch can be staggered with the feeding channel, so that the fastener in the positioning notch is staggered with the fastener in the feeding channel, whereby interference of the fastener in the positioning notch by the fastener in the feeding channel can be reduced, and the assembly mechanism on the manipulator can pick up the fastener in the positioning notch.

In some embodiments, the positioning assembly further includes a fourth detector, where the fourth detector is disposed on the fixed seat, and the fourth detector is configured to detect the fastener in the positioning notch of the positioning seat located at the loading position.

In the foregoing technical solution, the fourth detector is disposed on the fixed seat of the positioning assembly, and the fourth detector can detect the fastener in the positioning notch to ensure that a fastener is accommodated in the positioning notch, which ensures normal operation of the fastener assembly line.

In some embodiments, the feeding mechanism further includes a plurality of vibrating members, where the vibrating members correspond to the distribution tracks one to end, and the vibrating member is used for driving the corresponding distribution track to vibrate, so as to convey the fastener from the end, near the feed port, of the feeding channel to the end, away from the feed port, of the feeding channel.

In the foregoing technical solution, a vibrating member is disposed for each corresponding distribution track, and each vibrating member can drive the corresponding distribution track to vibrate, so as to assist the distribution track in conveying the fastener to reduce resistance to the conveying of the fastener due to excessive friction force borne by the fastener in the feeding channel of the distribution track, which can then ensure that the fastener can be smoothly conveyed from the end, near the feed port, of the feeding channel to the end, away from the feed port, of the feeding channel.

### Brief Description of Drawings

In order to explain the technical solutions in the embodiments of the present application more clearly, accompanying drawings required to use in the embodiments will be simply introduced below. It should be understood that the following drawings show only some embodiments of the present application and should not be regarded as limiting the scope, and other relevant drawings may be obtained based on these drawings by those of ordinary skill in the art without any creative efforts.
FIG. 1 is a schematic structural diagram of an assembly mechanism provided in some embodiments of the present application;
FIG. 2 is a partially enlarged view of position A of the assembly mechanism shown in FIG. 1;
FIG. 3 is a schematic structural diagram of an actuator of the assembly mechanism provided in some embodiments of the present application;
FIG. 4 is a partial cross-sectional view of the actuator of the assembly mechanism provided in some embodiments of the present application;
FIG. 5 is a schematic structural diagram of a manipulator provided in some embodiments of the present application;
FIG. 6 is a schematic structural diagram of a connecting mechanism of the manipulator provided in some embodiments of the present application;
FIG. 7 is a schematic structural diagram of a fastener assembly line provided in some embodiments of the present application;
FIG. 8 is a schematic structural diagram of a feeding mechanism provided in some embodiments of the present application; and
FIG. 9 is a partially enlarged view of position B of the feeding mechanism shown in FIG. 8.

Reference numerals: 1000 - fastener assembly line; 100 - manipulator; 10 - assembly mechanism; 11 - actuator; 111- detection end; 112 - execution end; 113 - adsorption head; 114 - vacuum suction tube; 1141 - vacuum line; 115 - connector; 116 - insulating sleeve; 1161 - positioning groove; 12 - first drive unit; 121 - movable seat; 1211 - abutment portion; 122 - first drive member; 123 - mounting seat; 124 - second detector; 13 - first detector; 20 - connecting mechanism; 21 - base; 211 - connecting portion; 212 - second slide rail; 22 - second drive unit; 221 - screw rod; 2211 - threaded segment; 222 - second drive member; 223 - screw rod sleeve; 23 - third detector; 200 - feeding mechanism; 201 - feeder; 2011 - feed port; 202 - distribution track; 2021 - feeding channel; 203 - frame; 204 - positioning assembly; 2041 - fixed seat; 2041a - mounting groove; 2042 - positioning seat; 2042a - positioning notch; 2043 - third drive member; 2044 - fourth detector; 205 - vibrating member; 300 - robot; X - first direction; Y - second direction.

### Detailed Description of Embodiments

To make the objectives, technical solutions and advantages of the embodiments of the present application clearer, the technical solutions in the embodiments of the present application will be described clearly below with reference to the accompanying drawings in the embodiments of the present application. Apparently, the described embodiments are some but not all of the embodiments of the present application. All other embodiments obtained by those of ordinary skill in the art based on the embodiments of the present application without creative efforts shall fall within the protection scope of the present application.

Unless otherwise defined, all technical and scientific terms used in the present application have the same meanings as those commonly understood by technical personnel in the technical field of the present application; the terms used in the specification of the present application are only for the purpose of describing specific embodiments and are not intended to limit the present application; and the terms "include" and "have" in the specification and claims of the present application, the accompanying drawings, and any variations thereof, are intended to cover nonexclusive inclusion. The terms "first", "second", and the like in the specification and claims of the present application or the accompanying drawings are used to distinguish different objects, rather than to describe specific sequences or primary and secondary relationships.

The "embodiment" mentioned in the present application means that specific features, structures or characteristics described in conjunction with the embodiment may be included in at least one embodiment of the present application. This phrase appearing in various places of the description does not necessarily refer to the same embodiment, nor is an independent or alternative embodiment mutually exclusive with other embodiments.

In the description of the present application, it should be noted that, unless otherwise specified and defined, the terms "mounted", "connected", "connection", and "attached" should be broadly understood, for example, the "connection" may be a fixed connection, a detachable connection, an integral connection, a direct connection, a connection through a medium, or a communication of interiors of two elements. Those of ordinary skill in the art may understand the specific meanings of the above terms in the present application according to specific circumstances.

The term "and/or" in the present application is merely an association relationship for describing associated objects, and represents that three relationships may exist. For example, A and/or B may represent the following three cases: A exists alone, both A and B exist, and B exists alone. In addition, the character "/" in the present application generally indicates an "or" relationship between the associated objects.

In the embodiments of the present application, the same reference numerals represent the same components, and for simplicity, detailed descriptions of the same components are omitted in different embodiments. It should be understood that, in the embodiments of the present application shown in the accompanying drawings, dimensions of various components and integrated apparatuses, such as thickness, length, and width, are only illustrative and should not constitute any limitations on the present application.

In the present application, "a plurality of" means two or more (including two).

In the field of mechanical manufacturing, a fastener is usually used to connect two objects to achieve a connection relationship between the two objects. For example, two objects are connected by a fastener in a process of welding, screwing, bonding, riveting, or the like. The riveting has good impact resistance and seismic performance, and has characteristics such as reliable connection, small component deformation, good fatigue resistance, and insensitivity to stress concentration. Therefore, the riveting process has been widely developed and popularized.

In order to improve the riveting efficiency of a workpiece to be connected, a riveting device is usually used in the prior art to automatically rivet the workpiece to be connected, so as to improve the machining efficiency and production efficiency of the workpiece to be connected.

The inventors found, for a general riveting process, a rivet is usually manually loaded to rivet the workpiece to be connected. However, the manual riveting is inefficient and cannot meet existing production requirements. In order to improve the riveting efficiency of a workpiece to be connected, a riveting device is usually used in the prior art to automatically rivet the workpiece to be connected, so as to improve the machining efficiency and production efficiency of the workpiece to be connected. However, the existing riveting device cannot effectively ensure compression force between the fastener such as a rivet and the workpiece to be connected, resulting in a phenomenon of inadequate assembly between the fastener and the workpiece to be connected, poor connection accuracy and quality of the fastener, a risk of detachment of the fastener during use, and low assembly reliability and stability of the fastener.

Based on the above considerations, in order to solve the problem of poor assembly accuracy and quality of the fastener, the inventor designed an assembly mechanism for assembling a fastener after in-depth research. The assembly mechanism includes an actuator, a first drive unit, and a first detector. The first drive unit is connected to the actuator, and the first drive unit is used for driving the actuator to move in a first direction, so that the actuator assembles a fastener in the first direction. The first detector is used for obtaining a magnitude of the pressure acting on the fastener by the actuator and generating a pressure signal, and the first drive unit responds to the pressure signal to control the magnitude of the pressure acting on the fastener by the actuator within a preset range.

In the assembly mechanism of this structure, the first detector can obtain the magnitude of the pressure acting on the fastener by the actuator and generate the pressure signal when the first drive unit drives the actuator to assemble the fastener in the first direction, so that the first drive unit can control the magnitude of the pressure acting on the fastener by the actuator within the preset range according to the pressure signal, and the assembly mechanism of this structure can control force acting on the fastener by the actuator when assembling the fastener to monitor the assembly state of the fastener in real time, thereby alleviating a phenomenon of inadequate assembly of the fastener due to too small force acting on the fastener by the actuator to ensure assembly accuracy of the fastener, reducing a risk of damage to the fastener or a workpiece to be assembled due to too large force acting on the fastener by the actuator to effectively improve assembly stability and reliability of the fastener and reduce a risk of detachment of the fastener during use.

Embodiments of the present application provide an assembly mechanism, which can solve problems of low assembly reliability and stability of an existing fastener caused by the risk of detachment of the fastener during use due to poor connection accuracy and quality of the fastener during assembly. A specific structure of the assembly mechanism will be explained in detail below with reference to the accompanying drawings.

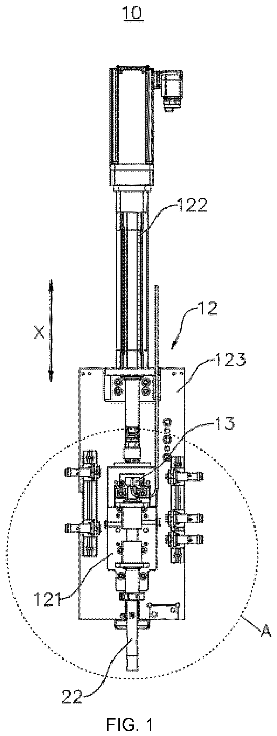

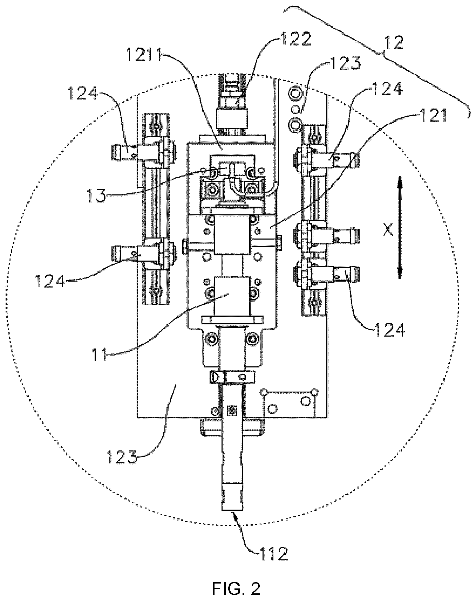

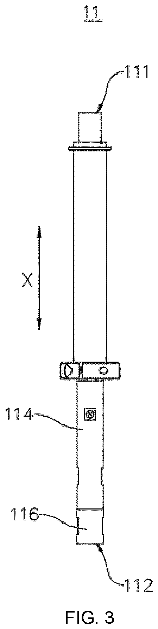

According to some embodiments of the present application, referring to FIGs. 1, 2, and 3, FIG. 1 is a schematic structural diagram of an assembly mechanism 10 provided in some embodiments of the present application, FIG. 2 is a partially enlarged view of position A of the assembly mechanism 10 shown in FIG. 1, and FIG. 3 is a schematic structural diagram of an actuator 11 of the assembly mechanism 10 provided in some embodiments of the present application. An embodiment of the present application provides an assembly mechanism 10 for assembling a fastener. The assembly mechanism 10 includes an actuator 11, a first drive unit 12, and a first detector 13. The first drive unit 12 is connected to the actuator 11, and the first drive unit 12 is used for driving the actuator 11 to move in a first direction X, so that the actuator 11 assembles a fastener in the first direction X. The first detector 13 is used for obtaining a magnitude of the pressure acting on the fastener by the actuator 11 and generating a pressure signal, and the first drive unit 12 responds to the pressure signal to control the magnitude of the pressure acting on the fastener by the actuator 11 within a preset range.

In the above, the fastener may be a rivet, a screw, a pin, or the like to implement riveting, screwing, or the like of a workpiece to be assembled. This is not limited in the present application. It should be noted that the assembly mechanism 10 can also pick up the fastener, so that the fastener is assembled onto the workpiece to be assembled. When picking up the fastener, the assembly mechanism 10 of this structure can reduce the risk of damage to the fastener due to excessive force acting on the fastener by the actuator 11.

Optionally, the assembly mechanism 10 may be applied in many scenarios, for example, the assembly mechanism 10 is fixed to a fixing object, a fastener is conveyed to be below the actuator 11 of the assembly mechanism 10, and the assembly mechanism 10 can pick up and assemble the fastener. Of course, the assembly mechanism 10 may alternatively be connected to other devices for use, such as a robot or a three-axis gantry frame.

The first drive unit 12 is used for driving the actuator 11 to move in the first direction X, so that the actuator 11 assembles the fastener in the first direction X, that is, the actuator 11 is disposed on the first drive unit 12, so that the first drive unit 12 can drive the actuator 11 to move in the first direction X, and the fastener can be assembled onto the workpiece to be assembled. A structure of the first drive unit 12 may be various, such as an electric push rod, a linear motor, or a cylinder.

The actuator 11 plays a role in assembling the fastener, that is, the actuator 11 can tighten the fastener, so as to assemble the fastener. For example, the actuator 11 can tighten the fastener by means of adsorption, gripping, or the like with a sucker, clamping jaws, or the like.

The first detector 13 plays a role in obtaining the magnitude of the pressure acting on the fastener by the actuator 11. The first detector 13 may directly detect the magnitude of the pressure between the actuator 11 and the fastener. For example, the first detector 13 is disposed on one end, used for assembling the fastener, of the actuator 11, so that the first detector 13 can be located between the fastener and the actuator 11 in the first direction X when the actuator 11 assembles the fastener, to obtain the magnitude of the pressure acting on the fastener by the actuator 11. Of course, in some embodiments, the first detector 13 may indirectly detect the magnitude of the pressure between the actuator 11 and the fastener, for example, the first detector 13 is disposed between the actuator 11 and the first drive unit 12 in the first direction X, and then the first detector 13 detects reactive force applied to the actuator 11 by the fastener, to obtain the magnitude of the pressure acting on the fastener by the actuator 11.

For example, the first detector 13 may be a strain pressure sensor, a piezoresistive pressure sensor, a capacitive pressure sensor, or the like.

It should be noted that the first drive unit 12 can control the magnitude of the pressure acting on the fastener by the actuator 11 within the preset range according to the pressure signal detected by the first detector 13, where the preset range is a range value of pressure acting on the fastener by the actuator 11 during assembly of the fastener. The range value of pressure may be a different range value according to actual operation requirements, that is, a range value of pressure required when the assembly mechanism 10 assembles different types, sizes, or models of fasteners, which are not limited by the embodiments of the present application.

The assembly mechanism 10 is equipped with the actuator 11, the first drive unit 12, and the first detector 13, where the first detector 13 can obtain the magnitude of the pressure acting on the fastener by the actuator 11 and generate the pressure signal when the first drive unit 12 drives the actuator 11 to assemble the fastener in the first direction X, so that the first drive unit 12 can control the magnitude of the pressure acting on the fastener by the actuator 11 within the preset range according to the pressure signal, and the assembly mechanism 10 of this structure can control force acting on the fastener by the actuator 11 when assembling the fastener to monitor the assembly state of the fastener in real time, thereby alleviating a phenomenon of inadequate assembly of the fastener due to too small force acting on the fastener by the actuator 11 to ensure assembly accuracy of the fastener, reducing a risk of damage to the fastener or a workpiece to be assembled due to too large force acting on the fastener by the actuator 11 to effectively improve assembly stability and reliability of the fastener and reduce a risk of detachment of the fastener during use.

According to some embodiments of the present application, as shown in FIGs. 1 and 2, the first drive unit 12 includes a movable seat 121 and a first drive member 122. The actuator 11 is disposed on the movable seat 121, and in the first direction X, the first detector 13 is used for detecting the magnitude of the pressure between the actuator 11 and the movable seat 121 and generating the pressure signal. The first drive member 122 is connected to the movable seat 121 and is used for driving the movable seat 121 to move in the first direction X.

In the above, the actuator 11 may be disposed on the movable seat 121 in various ways, for example, the actuator 11 may be fixed on the movable seat 121, and the first detector 13 is disposed between the actuator 11 and the movable seat 121 to detect reactive force applied to the actuator 11 by the fastener, so as to obtain the magnitude of the pressure acting on the fastener by the actuator 11. Of course, the actuator 11 may alternatively be movably disposed on the movable seat 121 in the first direction X, and the first detector 13 is disposed between the actuator 11 and the movable seat 121 in the first direction X to detect the pressure between the actuator 11 and the movable seat 121, so as to obtain the magnitude of the pressure acting on the fastener by the actuator 11.

For example, the first drive member 122 may be a linear motor, an electric push rod, or a cylinder, or the like. The movable seat 121 is connected to an output end of the first drive member 122, and the first drive member 122 can drive the movable seat 121 to move in the first direction X.

The actuator 11 is disposed on the movable seat 121, so that the first drive member 122 can drive the actuator 11 to move in the first direction X when driving the movable seat 121 to move in the first direction X, to achieve assembly of the fastener by the actuator 11. This structure is simple and convenient for the assembly by the actuator 11. Moreover, the first detector 13 detects the magnitude of the pressure between the actuator 11 and the movable seat 121 to obtain the magnitude of the pressure acting on the fastener by the actuator 11. That is, the reactive force acting on the fastener by the actuator 11 enables the same pressure to be generated between the actuator 11 and the movable seat 121, so that the first detector 13 detects the magnitude of the pressure between the actuator 11 and the movable seat 121 to obtain the magnitude of the pressure acting on the fastener by the actuator 11. The assembly mechanism 10 of this structure facilitates assembly of the first detector 13 and enables the first detector 13 to obtain the magnitude of the pressure acting on the fastener by the actuator 11.

According to some embodiments of the present application, as shown in FIGs. 1 and 2, the actuator 11 is movably disposed on the movable seat 121 in the first direction X. The movable seat 121 has an abutment portion 1211, the abutment portion 1211 is provided opposite to the actuator 11 in the first direction X, and the first detector 13 is disposed between the abutment portion 1211 and the actuator 11.

In the above, the abutment portion 1211 protrudes from one side of the movable seat 121, a mounting portion for mounting the actuator 11 is disposed on a side, having the abutment portion 1211, of the movable seat 121, the actuator 11 is movably mounted on the mounting portion in the first direction X, and the actuator 11 and the abutment portion 1211 are located on the same side of the movable seat 121.

The abutment portion 1211 is provided opposite to the actuator 11 in the first direction X, that is, the abutment portion 1211 and the actuator 11 are arranged spacedly in the first direction X, so that the first detector 13 can be disposed between the abutment portion 1211 and the actuator 11. When the actuator 11 assembles the fastener, the reactive force applied to the actuator 11 by the fastener pushes the actuator 11 to approach the abutment portion 1211 in the first direction X, and the first detector 13 is enabled to detect the magnitude of the pressure between the actuator 11 and the abutment portion 1211 of the movable seat 121, so as to obtain the magnitude of the pressure acting on the fastener by the actuator 11.

The actuator 11 is movably disposed on the movable seat 121 in the first direction X, and the movable seat 121 is provided with the abutment portion 1211 opposite to the actuator 11 in the first direction X, that is, the actuator 11 can move relative to the abutment portion 1211 in the first direction X, so that the actuator 11 can approach the abutment portion 1211 due to the reactive force of the fastener when assembling the fastener in the first direction X, and then the first detector 13 disposed between the abutment portion 1211 and the actuator 11 can detect the magnitude of the pressure between the actuator 11 and the movable seat 121 to obtain the magnitude of the pressure acting on the fastener by the actuator 11. This structure is conducive to reducing manufacturing difficulties of the assembly mechanism 10 and improving detection accuracy of the first detector 13.

According to some embodiments of the present application, as shown in FIGs. 1, 2, and 3, in the first direction X, the actuator 11 has a detection end 111 and an execution end 112 that are opposite to each other, the detection end 111 is opposite to the abutment portion 1211, and the execution end 112 is used for assembling the fastener. The first detector 13 is mounted at the detection end 111.

In the above, in the first direction X, the actuator 11 has a detection end 111 and an execution end 112 that are opposite to each other, that is, the actuator 11 extends in the first direction X, and two ends of the actuator 11 in the first direction X form the detection end 111 for abutment against the abutment portion 1211 and the execution end 112 for assembling the fastener separately.

The detection end 111 is opposite to the abutment portion 1211, that is, the end, near the abutment portion 1211, of the actuator 11 is provided spaced from the abutment portion 1211 in the first direction X, so that the first detector 13 mounted on the detection end 111 can detect the magnitude of the pressure between the detection end 111 of the actuator 11 and the abutment portion 1211.

For example, the first detector 13 may be mounted on the detection end 111 of the actuator 11 by means of bolt connection, clamping, bonding, or the like.

The actuator 11 has the execution end 112 for assembling the fastener and the detection end 111 opposite to the abutment portion 1211 in the first direction X, the first detector 13 is mounted on the detection end 111 of the actuator 11, and the actuator 11 is enabled to drive the first detector 13 to approach the abutment portion 1211 when assembling the fastener in the first direction X, so as to detect the magnitude of the pressure between the detection end 111 and the abutment portion 1211 to obtain the magnitude of the pressure acting on the fastener by the actuator 11.

According to some embodiments of the present application, as shown in FIGs. 1 and 2, the first drive unit 12 further includes a mounting seat 123 and a second detector 124. The movable seat 121 is movably disposed on the mounting seat 123 in the first direction X, and the first drive member 122 is used for driving the movable seat 121 to move relative to the mounting seat 123 in the first direction X. The second detector 124 is disposed on the mounting seat 123, the second detector 124 is used for detecting a position of the movable seat 121 on the mounting seat 123 and generating a first position signal, and the first drive member 122 responds to the first position signal.

In the above, the mounting seat 123 is fixed to a fixing object or assembled to other device, so that the assembly mechanism 10 can be mounted on the fixing object or other device.

In FIG. 1, the first drive member 122 is mounted on the mounting seat 123, and the movable seat 121 is connected to the output end of the first drive member 122, so that the first drive member 122 can drive the movable seat 121 to move relative to the mounting seat 123 in the first direction X, and the actuator 11 is driven to assemble the fastener in the first direction X. For example, the first drive member 122 may be mounted on the mounting seat 123 in various ways, such as by bolt connection, clamping, or bonding.

The movable seat 121 is movably disposed on the mounting seat 123 in the first direction X, that is, the movable seat 121 can move relative to the mounting seat 123 in the first direction X. For example, a first slide rail extending in the first direction X is disposed on the mounting seat 123, a first slider in sliding fit with the first slide rail is disposed on the movable seat 121, and the movable seat 121 is enabled to move relative to the mounting seat 123 in the first direction X. Of course, in some embodiments, the first slide rail may alternatively be disposed on the movable seat 121, and correspondingly, the first slider is disposed on the mounting seat 123.

The second detector 124 is used for detecting the position of the movable seat 121 on the mounting seat 123, that is, the second detector 124 can detect the position of the movable seat 121 relative to the mounting seat 123 in the first direction X, so as to obtain a travel of the movable seat 121 relative to the mounting seat 123 in the first direction X. One or more second detectors 124 may be disposed on the mounting seat 123. For example, in FIG. 2, five second detectors 124 are disposed on the mounting seat 123, two second detectors 124 among the five second detectors 124 are located on one side of the movable seat 121 and arranged spacedly in the first direction X, the other three second detectors 124 among the five second detectors 124 are located on the other side of the movable seat 121 and arranged spacedly in the first direction X, and the plurality of second detectors 124 can detect a plurality of positions of the movable seat 121 on the mounting seat 123, so as to adapt to different operating scenarios. Of course, in other embodiments, a quantity of second detectors 124 may alternatively be two, three, four, six, or the like. Similarly, the plurality of second detectors 124 may be disposed on the same side of the movable seat 121 or on two sides of the movable seat 121.

For example, the second detector 124 may be an infrared sensor, a photosensitive sensor, a contact sensor, or the like.

The first drive unit 12 is further provided with the mounting seat 123, and the movable seat 121 is movably disposed on the mounting seat 123 in the first direction X, so that the first drive member 122 can drive the movable seat 121 to move on the mounting seat 123 in the first direction X. This assembly mechanism 10 has high structural stability and is easy to manufacture. Moreover, the second detector 124 used for detecting the position of the movable seat 121 in the first direction X is further disposed on the mounting seat 123, so that the second drive member 222 can accurately control a movement range of the movable seat 121 according to the first position signal detected by the second detector 124, thereby improving operational accuracy of the assembly mechanism 10 and reducing over-travel of the movable seat 121 during movement in the first direction X to reduce the risk of damage to the fastener by the assembly mechanism 10.

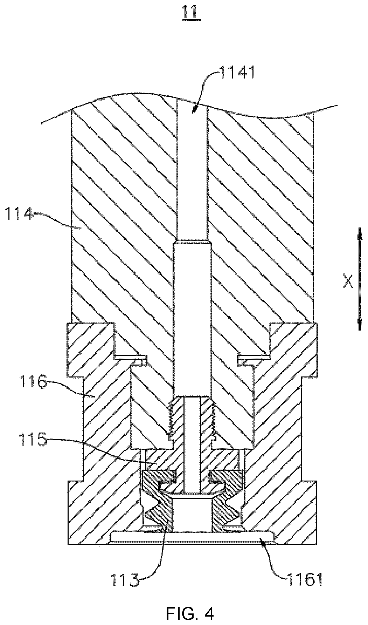

According to some embodiments of the present application, referring to FIG. 3 and further referring to FIG. 4, FIG. 4 is a partial cross-sectional view of the actuator 11 of the assembly mechanism 10 provided in some embodiments of the present application. The actuator 11 includes an adsorption head 113, and the adsorption head 113 is configured to adsorb the fastener.

In the above, the adsorption head 113 plays a role in adsorbing the fastener, thereby fastening the fastener onto the actuator 11 to implement the pickup and assembly of the fastener. A structure of the adsorption head 113 may be various, such as a suction cup or an adsorption tube. For example, in FIG. 4, the adsorption head 113 is a suction cup.

The actuator 11 is provided with the adsorption head 113 used for adsorbing the fastener, so that the actuator 11 can pick up and assemble the fastener through adsorption. The actuator 11 of this structure can expand the scope of application of the actuator 11, pick up and assemble fasteners of different models or sizes, reduce difficulties in picking up fasteners by the actuator 11, and also reduce damage to surfaces of the fasteners by the actuator 11, so as to improve assembly quality of the fasteners.

According to some embodiments of the present application, with reference to FIGs. 2, 3, and 4, the actuator 11 further includes a vacuum suction tube 114. The vacuum suction tube 114 is connected to the first drive unit 12, and the first drive unit 12 is used for driving the vacuum suction tube 114 to move in the first direction X. The adsorption head 113 is connected to one end of the vacuum suction tube 114 in the first direction X.

In the above, the vacuum suction tube 114 is disposed on the movable seat 121, the vacuum suction tube 114 extends in the first direction X and is provided spaced from the abutment portion 1211 of the movable seat 121 in the first direction X, and the first detector 13 is mounted at an end, near the abutment portion 1211 in the first direction X, of the vacuum suction tube 114, that is, the vacuum suction tube 114 has the detection end 111.

The vacuum suction tube 114 plays a role in providing power for the adsorption head 113 to adsorb the fastener. In FIG. 4, a vacuum line 1141 is formed inside the vacuum suction tube 114, and the adsorption head 113 is connected to an end, away from the abutment portion 1211, of the vacuum suction tube 114 and is in communication with the vacuum line 1141 of the vacuum suction tube 114, so that the vacuum suction tube 114 can extract air in the adsorption head 113 to provide power for the adsorption head 113 to adsorb the fastener.

Optionally, the actuator 11 further includes a connector 115, and the connector 115 is connected between the adsorption head 113 and the vacuum suction tube 114, so that the adsorption head 113 can be connected to the vacuum suction tube 114. For example, the connector 115 is screwed to the vacuum suction tube 114, and the adsorption head 113 is clamped to the connector 115, so that the adsorption head 113 can be connected to the vacuum suction tube 114. Of course, in some embodiments, the adsorption head 113 may alternatively be directly connected to the vacuum suction tube 114, for example, the adsorption head 113 is connected to the vacuum suction tube 114 by bonding, clamping, or the like.

The adsorption head 113 is disposed at one end of the vacuum suction tube 114, so that the vacuum suction tube 114 can provide power for the adsorption head 113 to adsorb the fastener, which is conducive to improving the reliability and stability of adsorption of the fastener by the adsorption head 113, and can effectively alleviate the phenomenon of detachment of the fastener when the assembly mechanism 10 picks up or assemble the fastener.

According to some embodiments of the present application, with reference to FIGs. 3 and 4, the actuator 11 further includes an insulating sleeve 116. The insulating sleeve 116 is connected to an end, near the adsorption head 113 in the first direction X, of the vacuum suction tube 114, and the insulating sleeve 116 is sleeved over an outer side of the adsorption head 113 to isolate the vacuum suction tube 114 from the fastener.

In the above, the insulating sleeve 116 is connected to the end, near the adsorption head 113 in the first direction X, of the vacuum suction tube 114, that is, the insulating sleeve 116 is disposed on the end, away from the abutment portion 1211, of the vacuum suction tube 114 in the first direction X.

The insulating sleeve 116 is sleeved over the outer side of the adsorption head 113, that is, the insulating sleeve 116 surrounds an outer circumference of the adsorption head 113 around an axis of the vacuum suction tube 114. The insulating sleeve 116 may be made of various materials, such as rubber, plastic, or silicone.

In some embodiments, as shown in FIG. 4, in the first direction X, a positioning groove 1161 is formed on a side, away from the abutment portion 1211, of an insulating seat, and the positioning groove 1161 is used for accommodating the fastener, where the adsorption head 113 extends into the positioning groove 1161 of the insulating seat, so that the adsorption head 113 can adsorb the fastener into the positioning groove 1161 to position the fastener, which can reduce shaking of the fastener during pickup or assembly.

The insulating sleeve 116 is disposed at the end, near the adsorption head 113, of the vacuum suction tube 114, and the insulating sleeve 116 is sleeved over the outer side of the adsorption head 113, so that the insulating sleeve 116 can separate the fastener and the vacuum suction tube 114 when the adsorption head 113 adsorbs the fastener, to achieve insulation between the fastener and the vacuum suction tube 114, thereby reducing the risk of a short circuit between the fastener and the vacuum suction tube 114 to reduce safety hazards when the assembly mechanism 10 assembles the fastener.

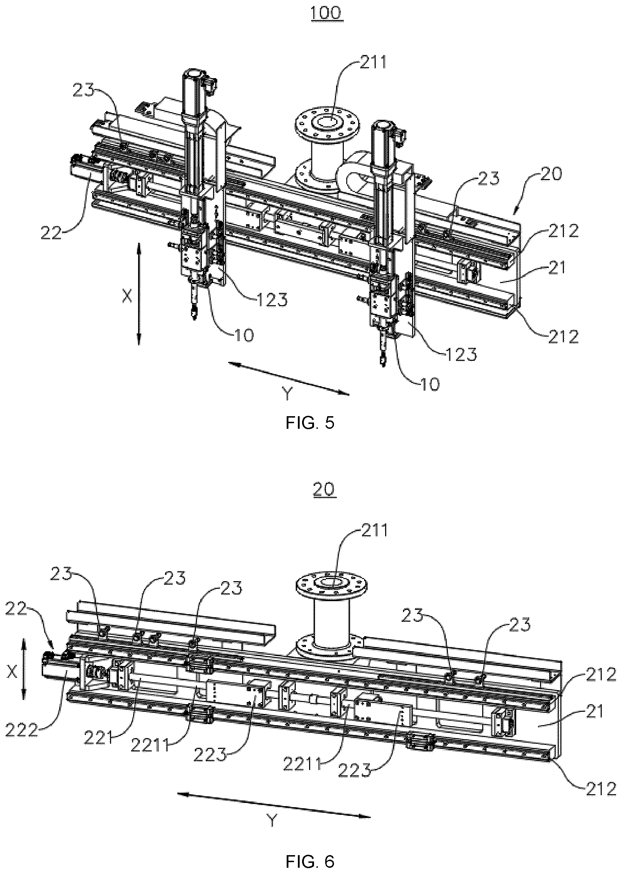

According to some embodiments of the present application, referring to FIG. 1 and further referring to FIG. 5, FIG. 5 is a schematic structural diagram of a manipulator 100 provided in some embodiments of the present application. An embodiment of the present application further provides a manipulator 100. The manipulator 100 includes a connecting mechanism 20 and a plurality of assembly mechanisms 10 in any of the foregoing solutions. The connecting mechanism 20 is used to be connected to a robot. The plurality of assembly mechanisms 10 are arranged spacedly on the connecting mechanism 20 in a second direction Y, the second direction Y being perpendicular to the first direction X.

In the above, the connecting mechanism 20 is used to be connected to the robot, that is, the connecting mechanism 20 is assembled to the robot to enable the robot to drive the manipulator 100 to move, so as to automatically pick up and assemble fasteners.

For example, in FIG. 5, the manipulator 100 has two assembly mechanisms 10, and the two assembly mechanisms 10 are arranged spacedly on the connecting mechanism 20 in the second direction Y, so that the manipulator 100 can pick up or assemble two fasteners simultaneously. Of course, in other embodiments, three, four, five, or more assembly mechanisms 10 may be disposed on the connecting mechanism 20.

The plurality of assembly mechanisms 10 are disposed on the connecting mechanism 20, and the plurality of assembly mechanisms 10 are arranged spacedly on the connecting mechanism 20 in the second direction Y perpendicular to the first direction X, so that the manipulator 100 can pick up or assemble a plurality of fasteners simultaneously, which is beneficial to improving the assembly efficiency of the fasteners.

According to some embodiments of the present application, as shown in FIG. 5, the manipulator 100 includes two assembly mechanisms 10, and the connecting mechanism 20 is configured to adjust the distance between the two assembly mechanisms 10 in the second direction Y

In the above, the connecting mechanism 20 is configured to adjust the distance between the two assembly mechanisms 10, that is, the connecting mechanism 20 can drive one of the two assembly mechanisms 10 to move relative to the other assembly mechanism 10 in the second direction Y, so as to adjust the distance between the two assembly mechanisms 10 in the second direction Y

It should be noted that a structure of the connecting mechanism 20 may be various, and the distance between the two assembly mechanisms 10 may be adjusted manually or automatically.

The manipulator 100 is equipped with two assembly mechanisms 10, and the connecting mechanism 20 can adjust the distance between the two assembly mechanisms 10 in the second direction Y, so that the manipulator 100 can adapt to operational requirements of workpieces to be assembled with different widths, and the range of use of the manipulator 100 can be enlarged to be compatible with the workpieces to be assembled with different widths.

According to some embodiments of the present application, referring to FIG. 5 and further referring to FIG. 6, FIG. 6 is a schematic structural diagram of the connecting mechanism 20 of the manipulator 100 provided in some embodiments of the present application. The connecting mechanism 20 includes a base 21 and a second drive unit 22. The base 21 is used to be connected to the robot, and the assembly mechanism 10 is movably disposed on the base 21 in the second direction Y The second drive unit 22 is disposed on the base 21 and connected to the two assembly mechanisms 10, and the second drive unit 22 is configured to drive the two assembly mechanisms 10 to approach or move away from each other in the second direction Y, so as to adjust the distance between the two assembly mechanisms 10.

In the above, the base 21 is provided with a connecting portion 211, and the connecting portion 211 is used to be connected to the robot, so that the base 21 can be connected to the robot.

The assembly mechanism 10 is movably disposed on the base 21 in the second direction Y, that is, the assembly mechanism 10 can move relative to the base 21 in the second direction Y Optionally, a second slide rail 212 extending in the second direction Y is disposed on the base 21, a second slider is disposed on the second slide rail 212, and the second slider is in sliding fit with the second slide rail 212 and is connected to the mounting seat 123 of the assembly mechanism 10, so that the assembly mechanism 10 is movably disposed on the base 21 in the second direction Y For example, two second slide rails 212 are disposed on the base 21, the two second slide rails 212 are arranged spacedly in the first direction X, two second sliders are connected to the mounting seat 123 of each assembly mechanism 10, and the two second sliders are in sliding fit with the two second slide rails 212 separately to improve the stability of movement of the assembly mechanism 10 relative to the base 21 in the second direction Y

The second drive unit 22 is mounted on the base 21, and the second drive unit 22 is configured to drive the two assembly mechanisms 10 to approach or move away from each other in the second direction Y, that is, the second drive unit 22 can drive the two assembly mechanisms 10 to move towards or away from each other in the second direction Y, so that the two assembly mechanisms 10 can approach or move away from each other in the second direction Y. A structure of the second drive unit 22 may be various, for example, the second drive unit 22 may be a bidirectional cylinder mounted on the base 21, and the mounting seats 123 of the two assembly mechanisms 10 are connected to two output ends of the bidirectional cylinder separately, so that the second drive unit 22 can drive the two assembly mechanisms 10 to approach or move away from each other in the second direction Y Of course, the second drive unit 22 may alternatively be two electric push rods mounted on the base 21, and each electric push rod is connected to the mounting seat 123 of one assembly mechanism 10, so that the second drive unit 22 can drive the two assembly mechanisms 10 to approach or move away from each other in the second direction Y

The connecting mechanism 20 is equipped with the base 21 used to be connected to the robot and the second drive unit 22 disposed on the base 21, and the assembly mechanisms 10 are movably disposed on the base 21 in the second direction Y, so that the second drive unit 22 can drive the assembly mechanisms 10 to move relative to the base 21 in the second direction Y, and the two assembly mechanisms 10 approach or move away from each other in the second direction Y, so as to adjust the distance between the two assembly mechanisms 10, This structure is simple and easy to implement and adjust.

In some embodiments, as shown in FIGs. 5 and 6, the second drive unit 22 may include a screw rod 221, a second drive member 222, and two screw rod sleeves 223. The screw rod 221 is rotatably disposed on the base 21 and extends in the second direction Y, the screw rod 221 has two threaded segments 2211 with opposite threads, and the two threaded segments 2211 are arranged spacedly in the second direction Y The second drive member 222 is connected to the screw rod 221, and the second drive member 222 is used for driving the screw rod 221 to rotate relative to the base 21. The two screw rod sleeves 223 are sleeved over outer sides of the two threaded segments 2211 respectively and connected to the two assembly mechanisms 10 respectively.

In the above, the screw rod 221 has two threaded segments 2211 with opposite threads, the two threaded segments 2211 are arranged spacedly in the second direction Y, that is, the screw rod 221 has two threaded segments 2211 arranged spacedly in its extension direction, and thread directions of the two threaded segments 2211 are opposite, so that the screw rod 221 rotating relative to the base 21 can drive the two screw rod sleeves 223 sleeved over the outer side of the screw rod 221 to approach or move away from each other in the second direction Y

For example, the second drive member 222 may be an electric motor, a hydraulic motor, or the like.

The second drive unit 22 is equipped with the screw rod 221, the second drive member 222, and the two screw rod sleeves 223, where the screw rod 221 has two threaded segments 2211 with opposite threads and arranged spacedly in the second direction Y, and the two screw rod sleeves 223 are sleeved over the outer sides of the two threaded segments 2211 of the screw rod 221 respectively and connected to the two assembly mechanisms 10 respectively, so that the second drive member 222 can drive the two screw rod sleeves 223 to approach or move away from each other in the second direction Y when driving the screw rod 221 to rotate relative to the base 21, to simultaneously drive the two assembly mechanisms 10 to approach or move away from each other in the second direction Y, thereby adjusting the distance between the two assembly mechanisms 10 in the second direction Y

According to some embodiments of the present application, with continued reference to FIGs. 5 and 6, the connecting mechanism 20 further includes a third detector 23. The third detector 23 is disposed on the base 21, the third detector 23 is used for detecting a position of the assembly mechanism 10 on the base 21 and generating a second position signal, and the second drive unit 22 responds to the second position signal.

In the above, the third detector 23 is used for detecting the position of the assembly mechanism 10 on the base 21, that is, the third detector 23 can detect the position of the assembly mechanism 10 relative to the base 21 in the second direction Y Since the second drive unit 22 can simultaneously drive the two assembly mechanisms 10 to approach or move away from each other in the second direction Y, the distance between the two assembly mechanisms 10 in the second direction Y can be obtained by detecting the positions of the assembly mechanisms 10 relative to the base 21 in the second direction Y

Optionally, one or more third detectors 23 may be disposed on the base 21. For example, in FIG. 6, six third detectors 23 are disposed on the base 21, and the six third detectors 23 are arranged spacedly on the base 21 in the second direction Y, so that the six third detectors 23 are used for detecting a plurality of positions of one of the two assembly mechanisms 10 in the second direction Y respectively, to obtain data information of different distances between the two assembly mechanisms 10 in the second direction Y for different operating scenarios. Of course, in other embodiments, a quantity of third detectors 23 may alternatively be two, three, four, five, or the like.

For example, the third detector 23 may be an infrared sensor, a photosensitive sensor, a contact sensor, or the like.

The third detector 23 is disposed on the base 21, and the third detector 23 can detect the position of the assembly mechanism 10 on the base 21, so that the second drive unit 22 can accurately control the position of the assembly mechanism 10 in the second direction Y according to the second position signal detected by the third detector 23, which is beneficial to improving the operational accuracy of the manipulator 100 to ensure the assembly accuracy of fasteners.

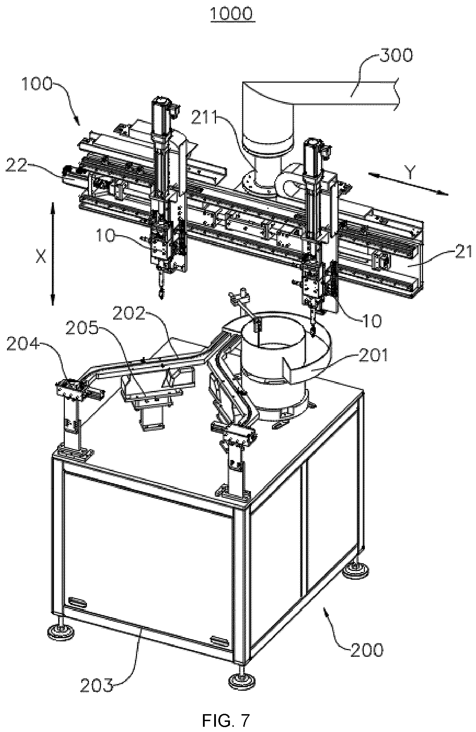

According to some embodiments of the present application, referring to FIGs. 5 and 6 and further referring to FIG. 7, FIG. 7 is a schematic structural diagram of a fastener assembly line 1000 provided in some embodiments of the present application. An embodiment of the present application further provides a fastener assembly line 1000. The fastener assembly line 1000 includes a feeding mechanism 200, a robot 300, and the manipulator 100 in any of the foregoing solutions. The feeding mechanism 200 is used for providing fastener(s), the connecting mechanism 20 is connected to the robot 300, and the robot 300 is configured to drive the manipulator 100 to move.

In the above, the feeding mechanism 200 provides fasteners for the assembly mechanism 10 on the manipulator 100. The feeding mechanism 200 may have various structures, such as a conveyor belt, a plate chain conveyor, a vibrating disk, or the like.

The robot 300 plays a role in driving the manipulator 100 to move. The robot 300 may be a four-axis robot arm, a six-axis robot arm, or the like. The connecting portion 211 of the base 21 of the connecting mechanism 20 is connected to an output end of the robot 300, and the robot 300 can drive the manipulator 100 to move, so as to pick up the fasteners provided by the feeding mechanism 200 and drive the fasteners to be assembled onto a workpiece to be assembled.

The robot 300 can drive the manipulator 100 to move, and the manipulator 100 can pick up the fasteners provided by the feeding mechanism 200 and assemble the fasteners, so as to achieve full automatic assembly of the fasteners, reduce manual involvement, and improve the assembly efficiency of the fasteners accordingly.

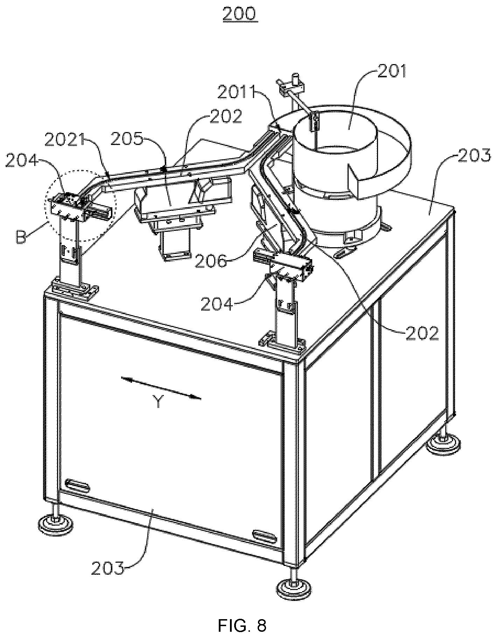

According to some embodiments of the present application, referring to FIG. 7 and further referring to FIG. 8, FIG. 8 is a schematic structural diagram of the feeding mechanism 200 provided in some embodiments of the present application. The feeding mechanism 200 includes a feeder and a plurality of distribution tracks 202. The feeder has a feed port 2011 for providing fastener(s). The distribution tracks 202 correspond to the assembly mechanisms 10 one to one, the distribution track 202 has a feeding channel 2021 for conveying fasteners, one ends of the feeding channels 2021 of the plurality of distribution tracks 202 are connected to the feed port 2011, and the feeding channel 2021 is used for conveying the fasteners from an end, near the feed port 2011, of the feeding channel 2021 to an end, away from the feed port 2011, of the feeding channel 2021 for the assembly mechanism 10 to pick up the fasteners.

In the above, the feeder has the feed port 2011 for providing fastener(s), that is, the feeder has the feed port 2011 that can output fasteners. For example, the feeder may be an electromagnetic vibrating disk, a motor vibrating disk, or the like.

One ends of the feeding channels 2021 of the plurality of distribution tracks 202 are connected to the feed port 2011, that is, each distribution track 202 is equipped with a feeding channel 2021 for conveying fasteners, and one end of the feeding channel 2021 of each distribution track 202 is connected to the feed port 2011 of the feeder, so that the fasteners provided by the feeder can be conveyed to the feeding channel 2021 of each distribution track 202 to achieve a distribution function for the fasteners.

For example, in FIGs. 7 and 8, since two assembly mechanisms 10 are disposed on the manipulator 100, the feeding mechanism 200 is equipped with two distribution tracks 202, and each distribution track 202 is used for providing fastener(s) for one assembly mechanism 10. Of course, in other embodiments, a quantity of distribution tracks 202 may alternatively be three, four, five, or the like.

Optionally, the feeding mechanism 200 may further include a frame 203, and the feeder and the plurality of distribution tracks 202 are mounted on the frame 203 for easy assembly of the feeder and the plurality of distribution tracks 202.

The feeding mechanism 200 is equipped with the feeder and the plurality of distribution tracks 202, and the feeding channels 2021 of the plurality of distribution tracks 202 are all connected to the feed port 2011 of the feeder, so that the plurality of distribution tracks 202 can distribute the fasteners provided by the feeder, the plurality of assembly mechanisms 10 on the manipulator 100 can simultaneously pick up the fasteners, and mutual interference can be reduced.

According to some embodiments of the present application, with continued reference to FIGs. 7 and 8, the feeding mechanism 200 further includes a plurality of positioning assemblies 204. The positioning assemblies 204 correspond to the distribution tracks 202 one to one, the positioning assemblies 204 are disposed at ends, away from the feed port 2011, of the feeding channels 2021, and the positioning assemblies 204 are used for positioning fasteners.

In the above, the positioning assemblies 204 are disposed at the ends, away from the feed port 2011, of the feeding channels 2021 of the distribution tracks 202 to position the fasteners conveyed by the feeding channels 2021. A structure of the positioning assembly 204 may be various, for example, the positioning assembly 204 is a positioning clamp disposed on the feeding channel 2021 of the distribution track 202, and the positioning clamp can clamp the fasteners conveyed by the feeding channel 2021 to position the fasteners. Of course, the positioning assembly 204 may further be equipped with a positioning block connected to the end, away from the feed port 2011, of the feeding channel 2021 of the distribution track 202, and the positioning block is provided with a positioning port for receiving the fasteners in the feeding channel 2021, so as to position the fasteners.

For example, in FIG. 8, two distribution tracks 202 correspond to two positioning assemblies 204.

The positioning assemblies 204 are disposed at the ends, away from the feed port 2011 of the feeder 201, of the feeding channels 2021, the positioning assemblies 204 can position the fasteners conveyed by the feeding channels 2021, and the assembly mechanisms 10 on the manipulator 100 can pick up the fasteners, whereby the accuracy of picking up the fasteners by the assembly mechanisms 10 is improved.

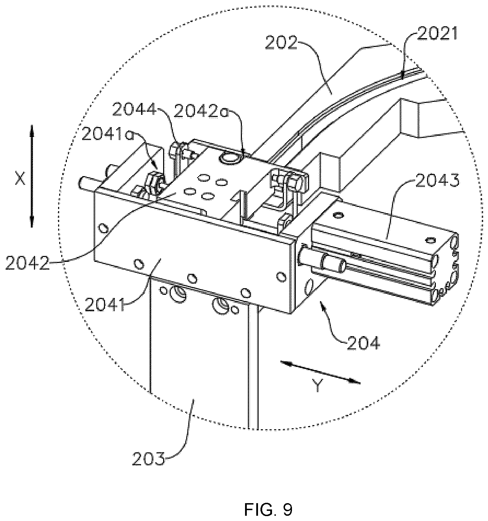

In some embodiments, referring to FIG. 8 and further referring to FIG. 9, FIG. 9 is a partially enlarged view of position B of the feeding mechanism 200 shown in FIG. 8. The positioning assembly 204 includes a fixed seat 2041, a positioning seat 2042, and a third drive member 2043. The fixed seat 2041 is disposed at the end, away from the feed port 2011, of the feeding channel 2021. The positioning seat 2042 is provided with a positioning notch 2042a for positioning a fastener, the positioning seat 2042 is movably disposed on the fixed seat 2041, and the positioning seat 2042 has a receiving position and a loading position (feeding position). The third drive member 2043 is connected to the positioning seat 2042, and the third drive member 2043 is used for driving the positioning seat 2042 to switch between the receiving position and the loading position. When the positioning seat 2042 is located at the receiving position, the positioning notch 2042a is aligned with the feeding channel 2021 of the corresponding distribution track 202 to receive a fastener conveyed by the feeding channel 2021. When the positioning seat 2042 is located at the loading position, the positioning notch 2042a is staggered with the feeding channel 2021 of the corresponding distribution track 202, and the assembly mechanism 10 picks up the fastener.

In the above, the fixed seat 2041 is mounted on the frame 203 and disposed at the end, away from the feed port 2011 of the feeder 201, of the feeding channel 2021 of the corresponding distribution track 202, the positioning seat 2042 is movably disposed on the fixed seat 2041, and the third drive member 2043 can drive the positioning seat 2042 to switch between the receiving position and the loading position, that is, when the third drive member 2043 drives the positioning seat 2042 to move relative to the fixed seat 2041, the positioning notch 2042a on the positioning seat 2042 can be aligned or staggered with the feeding channel 2021 of the corresponding distribution track 202, so that the positioning notch 2042a can receive the fastener conveyed by the feeding channel 2021, or the fastener located in the positioning notch 2042a can be staggered with the fastener in the feeding channel 2021.

Optionally, a mounting groove 2041a for accommodating the positioning seat 2042 is disposed on an upper surface of the fixed seat 2041 in the first direction X, and the positioning seat 2042 is movably disposed within the mounting groove 2041a, thereby improving the stability and reliability of movement of the positioning seat 2042 relative to the fixed seat 2041.

For example, the positioning seat 2042 is movably disposed within the mounting groove 2041a of the fixed seat 2041 in the second direction Y The third drive member 2043 drives the positioning seat 2042 to move relative to the fixed seat 2041 in the second direction Y, which can switch the positioning seat 2042 between the receiving position and the loading position. The positioning notch 2042a is disposed on a side, facing the feeding channel 2021, of the positioning seat 2042, so that the positioning notch 2042a can be aligned with the feeding channel 2021. The positioning notch 2042a penetrates the upper surface of the positioning seat 2042 in the first direction X, so that the assembly mechanism 10 on the manipulator 100 picks up the fastener in the positioning notch 2042a.

For example, the third drive member 2043 may be a cylinder, an electric push rod, or the like mounted on the fixed seat 2041, and the positioning seat 2042 is connected to an output end of the third drive member 2043.

The positioning notch 2042a for positioning a fastener is disposed on the positioning seat 2042, and the third drive member 2043 can drive the positioning seat 2042 to move between the loading position and the receiving position relative to the fixed seat 2041, so that the positioning notch 2042a can be aligned with the feeding channel 2021 when the positioning seat 2042 is located at the receiving position to receive and position the fastener. In addition, when the positioning seat 2042 is located at the loading position, the positioning notch 2042a can be staggered with the feeding channel 2021, so that the fastener in the positioning notch 2042a is staggered with the fastener in the feeding channel 2021, whereby interference of the fastener in the positioning notch 2042a by the fastener in the feeding channel 2021 can be reduced, and the assembly mechanism 10 on the manipulator 100 can pick up the fastener in the positioning notch 2042a.

According to some embodiments of the present application, as shown in FIG. 9, the positioning assembly 204 further includes a fourth detector 2044. The fourth detector 2044 is disposed on the fixed seat 2041, and the fourth detector 2044 is configured to detect the fastener in the positioning notch 2042a of the positioning seat 2042 located at the loading position.

In the above, the fourth detector 2044 can detect the fastener in the positioning notch 2042a of the positioning seat 2042 located at the loading position, that is, when the positioning notch 2042a of the positioning seat 2042 is staggered with the feeding channel 2021, the fourth detector 2044 can detect whether a fastener is accommodated in the positioning notch 2042a. A structure of the fourth detector 2044 may be various, for example, the fourth detector 2044 may be an infrared sensor, a photosensitive sensor, a contact sensor, or the like.

The fourth detector 2044 is disposed on the fixed seat 2041 of the positioning assembly 204, and the fourth detector 2044 can detect the fastener in the positioning notch 2042a to ensure that a fastener is accommodated in the positioning notch 2042a, which ensures normal operation of the fastener assembly line 1000.

According to some embodiments of the present application, as shown in FIG. 8, the feeding mechanism 200 further includes a plurality of vibrating members 205. The vibrating members 205 correspond to the distribution tracks 202 one to end. The vibrating member 205 is used for driving the corresponding distribution track 202 to vibrate, so as to convey the fastener from the end, near the feed port 2011, of the feeding channel 2021 to the end, away from the feed port 2011, of the feeding channel 2021.

In the above, the vibrating member 205 plays a role in driving the corresponding distribution track 202 to vibrate. For example, the vibrating member 205 is a linear vibration feeder 201, and the vibrating member 205 is mounted on the frame 203 and connected to the corresponding distribution track 202 to drive the distribution track 202 to vibrate, so as to convey the fastener from the end, near the feed port 2011, of the feeding channel 2021 to the end, away from the feed port 2011, of the feeding channel 2021. Of course, in other embodiments, the vibrating member 205 may alternatively be a flipping oscillator, a turbo pneumatic vibrator, or the like.

For example, in FIG. 8, two distribution tracks 202 correspond to two vibrating members 205. Of course, in some embodiments, two, three, four, or more vibrating members 205 may be correspondingly disposed for each distribution track 202.

A vibrating member 205 is disposed for each corresponding distribution track 202, and each vibrating member 205 can drive the corresponding distribution track 202 to vibrate, so as to assist the distribution track 202 in conveying the fastener to reduce resistance to the conveying of the fastener due to excessive friction force borne by the fastener in the feeding channel 2021 of the distribution track 202, which can then ensure that the fastener can be smoothly conveyed from the end, near the feed port 2011, of the feeding channel 2021 to the end, away from the feed port 2011, of the feeding channel 2021.

According to some embodiments of the present application, as shown in FIGs. 1 to 4, the present application provides an assembly mechanism 10. The assembly mechanism 10 includes an actuator 11, a first drive unit 12, and a first detector 13. The actuator 11 includes an adsorption head 113, a vacuum suction tube 114, and an insulating sleeve 116, where the vacuum suction tube 114 extends in a first direction X, the adsorption head 113 is mounted at an end of the vacuum suction tube 114 in the first direction X, the adsorption head 113 is configured to adsorb a fastener, the insulating sleeve 116 is connected to an end, near the adsorption head 113 in the first direction X, of the vacuum suction tube 114, and the insulating sleeve 116 is sleeved over an outer side of the adsorption head 113 to isolate the vacuum suction tube 114 from the fastener. The first drive unit 12 includes a mounting seat 123, a movable seat 121, and a first drive member 122, where the movable seat 121 is movably disposed on the mounting seat 123 in the first direction X, the movable seat 121 has an abutment portion 1211, the vacuum suction tube 114 is movably disposed on the movable seat 121 in the first direction X, and an end, away from the adsorption head 113 in the first direction X, of the vacuum suction tube 114 is opposite to the abutment portion 1211 in the first direction X. The first drive member 122 is connected to the movable seat 121, and the first drive member 122 is used for driving the movable seat 121 to move in the first direction X, so as to drive the adsorption head 113 of the actuator 11 to assemble the fastener in the first direction X. The first detector 13 is mounted at the end, away from the adsorption head 113 in the first direction X, of the vacuum suction tube 114, and is located between the abutment portion 1211 of the movable seat 121 and the vacuum suction tube 114 in the first direction X. The first detector 13 is used for detecting a magnitude of the pressure between the vacuum suction tube 114 of the actuator 11 and the abutment portion 1211 of the movable seat 121 when the actuator 11 assembles the fastener in the first direction X, and generating a pressure signal to obtain a magnitude of pressure acting on the fastener by the actuator 11, and the first drive member 122 can respond to the pressure signal to control the magnitude of the pressure acting on the fastener by the actuator 11 within a preset range.

It should be noted that the embodiments in the present application and the features of the embodiments may be combined with each other on a non-conflict basis.

Described above are merely preferred embodiments of the present application, and the present application is not limited thereto. Various modifications and variations may be made to the present application for those skilled in the art. Any modifications, equivalent substitutions, improvements, and the like made within the spirit and principle of the present application shall fall within the protection scope of the present application.

## Claims

1. An assembly mechanism, configured for assembling a fastener, wherein the assembly mechanism comprises:
an actuator;
a first drive unit connected to the actuator, wherein the first drive unit is configured for driving the actuator to move in a first direction, so that the actuator assembles the fastener in the first direction; and
a first detector configured for obtaining a magnitude of a pressure acting on the fastener by the actuator and generating a pressure signal, wherein the first drive unit is configured for responding to the pressure signal to control the magnitude of the pressure acting on the fastener by the actuator within a preset range.

2. The assembly mechanism according to claim 1, wherein the first drive unit comprises:
a movable seat, wherein the actuator is disposed on the movable seat, and the first detector is configured for detecting the magnitude of the pressure between the actuator and the movable seat in the first direction, and generating the pressure signal; and
a first drive member connected to the movable seat and configured for driving the movable seat to move in the first direction.

3. The assembly mechanism according to claim 2, wherein the actuator is movably disposed on the movable seat in the first direction; and
the movable seat has an abutment portion, the abutment portion is provided opposite to the actuator in the first direction, and the first detector is disposed between the abutment portion and the actuator.

4. The assembly mechanism according to claim 3, wherein in the first direction, the actuator has a detection end and an execution end that are provided opposite to each other, the detection end is provided opposite to the abutment portion, and the execution end is configured for assembling the fastener,
wherein the first detector is mounted at the detection end.

5. The assembly mechanism according to any one of claims 2-4, wherein the first drive unit further comprises:
a mounting seat, wherein the movable seat is movably disposed on the mounting seat in the first direction, and the first drive member is configured for driving the movable seat to move relative to the mounting seat in the first direction; and
a second detector disposed on the mounting seat, wherein the second detector is configured for detecting a position of the movable seat on the mounting seat and generating a first position signal, wherein the first drive member is configured for responding to the first position signal.

6. The assembly mechanism according to any one of claims 1-5, wherein the actuator comprises an adsorption head, and the adsorption head is configured for adsorbing the fastener.

7. The assembly mechanism according to claim 6, wherein the actuator further comprises:
a vacuum suction tube connected to the first drive unit, the first drive unit being configured for driving the vacuum suction tube to move in the first direction, wherein the adsorption head is connected to one end of the vacuum suction tube in the first direction.

8. The assembly mechanism according to claim 7, wherein the actuator further comprises:
an insulating sleeve connected to an end of the vacuum suction tube near the adsorption head in the first direction, wherein the insulating sleeve is sleeved over an outer side of the adsorption head to isolate the vacuum suction tube from the fastener.

9. A manipulator, comprising:
a connecting mechanism configured for being connected to a robot; and
a plurality of assembly mechanisms, each of which is according to any one of claims 1-8, wherein the plurality of assembly mechanisms are arranged spacedly on the connecting mechanism in a second direction, the second direction being perpendicular to the first direction.

10. The manipulator according to claim 9, wherein the manipulator comprises two assembly mechanisms, and the connecting mechanism is configured for adjusting a distance between the two assembly mechanisms in the second direction.

11. The manipulator according to claim 10, wherein the connecting mechanism comprises:
a base configured for being connected to the robot, wherein the assembly mechanism is movably disposed on the base in the second direction; and
a second drive unit disposed on the base and connected to the two assembly mechanisms, wherein the second drive unit is configured for driving the two assembly mechanisms to approach or move away from each other in the second direction, so as to adjust the distance between the two assembly mechanisms.

12. The manipulator according to claim 11, wherein the second drive unit comprises:
a screw rod rotatably disposed on the base and extending in the second direction, wherein the screw rod has two threaded segments with opposite threads, and the two threaded segments are arranged spacedly in the second direction;
a second drive member connected to the screw rod, wherein the second drive member is configured for driving the screw rod to rotate relative to the base; and
two screw rod sleeves sleeved over outer sides of the two threaded segments respectively and connected to the two assembly mechanisms respectively.

13. The manipulator according to claim 11 or 12, wherein the connecting mechanism further comprises:
a third detector disposed on the base, wherein the third detector is configured for detecting a position of the assembly mechanism on the base and generating a second position signal, and the second drive unit is configured for responding to the second position signal.

14. A fastener assembly line, comprising:
a feeding mechanism configured for providing at least one fastener;
a robot; and
the manipulator according to any one of claims 9-13, wherein the connecting mechanism is connected to the robot, and the robot is configured for driving the manipulator to move.

15. The fastener assembly line according to claim 14, wherein the feeding mechanism comprises:
a feeder having a feed port configured for providing the at least one fastener; and
a plurality of distribution tracks, wherein the distribution tracks correspond to the assembly mechanisms one to one, the distribution tracks each have a feeding channel configured for conveying the at least one fastener, one ends of the feeding channels of the plurality of distribution tracks are all connected to the feed port, and the feeding channels are each configured for conveying the at least one fastener from an end of the feeding channel near the feed port to an end of the feeding channel away from the feed port to allow the corresponding assembly mechanism to pick up the at least one fastener.

16. The fastener assembly line according to claim 15, wherein the feeding mechanism further comprises:
a plurality of positioning assemblies, wherein the positioning assemblies correspond to the distribution tracks one to one, the positioning assemblies are each disposed at the end of the corresponding feeding channel away from the feed port, and the positioning assemblies are each configured for positioning the at least one fastener.

17. The fastener assembly line according to claim 16, wherein the positioning assemblies each comprises:
a fixed seat disposed at the end of the corresponding feeding channel away from the feed port;
a positioning seat provided with a positioning notch configured for positioning the at least one fastener, wherein the positioning seat is movably disposed on the fixed seat, and the positioning seat has a receiving position and a loading position; and
a third drive member connected to the positioning seat, wherein the third drive member is configured for driving the positioning seat to switch between the receiving position and the loading position,
wherein when the positioning seat is located at the receiving position, the positioning notch is aligned with the feeding channel of the corresponding distribution track to receive the at least one fastener conveyed by the feeding channel; and when the positioning seat is located at the loading position, the positioning notch is staggered with the feeding channel of the corresponding distribution track to allow the assembly mechanism to pick up the at least one fastener.

18. The fastener assembly line according to claim 17, wherein the positioning assembly further comprises:
a fourth detector disposed on the fixed seat, wherein the fourth detector is configured for detecting the at least one fastener in the positioning notch of the positioning seat located at the loading position.

19. The fastener assembly line according to any one of claims 16-18, wherein the feeding mechanism further comprises:
a plurality of vibrating members, wherein the vibrating members correspond to the distribution tracks one to end, and the vibrating members are each configured for driving the corresponding distribution track to vibrate, so as to convey the at least one fastener from the end of the feeding channel near the feed port to the end of the feeding channel away from the feed port.
